# EUROPEAN PATENT SPECIFICATION

(11) **EP 2 422 539 B1**
(45) Date of publication and mention of the grant of the patent: **25.11.2015**
(21) Application number: 09779353.3
(22) Date of filing: 24.04.2009
(51) Int. Cl.: H04W 12/12, H04M 1/673, G06F 21/00, H04W 88/02, H04W 4/12, G06F 21/88

(54) **MOBILE DEVICE SECURITY**
SICHERHEIT FÜR MOBILE GERÄTE
SÉCURITÉ DE DISPOSITIF MOBILE

(43) Date of publication of application: 29.02.2012
(73) Proprietor: Telefonaktiebolaget L M Ericsson (publ), 164 83 Stockholm (SE)
(72) Inventor: GUERRA, Maria, Ruth, S-113 38 Stockholm (SE); HEGARTY, Cormac, S-168 53 Bromma (SE); TERRERO DÍAZ-CHIRÓN, Maria, Esther, E-28029 Madrid (ES)
(74) Representative: Lind, Robert
(86) International application number: PCT/EP2009/054989
(87) International publication number: WO 2010/121663

(56) References cited:
- EP-A- 1 473 952
- WO-A-2007/103121
- GB-A- 2 380 356

## Description

### Technical Field

The present invention relates to mobile device security. More particularly, the invention relates to a method and apparatus for locking, or otherwise restricting access to, a mobile device using an over-the-air locking instruction.

### Background

IP Multimedia services provide a dynamic combination of voice, video, messaging, data, etc. within the same session. By growing the number of basic applications and the media which it is possible to combine, the number of services offered to the end users will grow, and the inter-personal communication experience will be enriched. This will lead to a new generation of personalised, rich multimedia communication services, including so-called "combinational IP Multimedia" services.

The UMTS (Universal Mobile Telecommunications System) is a third generation wireless system designed to provide higher data rates and enhanced services to users. UMTS is a successor to the Global System for Mobile Communications (GSM), with an important evolutionary step between GSM and UMTS being the General Packet Radio Service (GPRS). GPRS introduces packet switching into the GSM core network and allows direct access to packet data networks (PDNs). This enables high-data rate packets switch transmissions well beyond the 64 kbps limit of ISDN through the GSM call network, which is a necessity for UMTS data transmission rates of up to 2 Mbps. UMTS is standardised by the 3rd Generation Partnership Project (3GPP) which is a conglomeration of regional standards bodies such as the European Telecommunication Standards Institute (ETSI), the Association of Radio Industry Businesses (ARIB) and others. See 3GPP TS 23.002 for more details.

The UMTS architecture includes a subsystem known as the IP Multimedia Subsystem (IMS) for supporting traditional telephony as well as new IP multimedia services (3GPP TS 22.228, TS 23.228, TS 24.229, TS 29.228, TS 29.229, TS 29.328 and TS 29.329 Releases 5 to 7). IMS provides key features to enrich the end-user person-to-person communication experience through the use of standardised IMS Service Enablers, which facilitate new rich person-to-person (client-to-client) communication services as well as person-to-content (client-to-server) services over IP-based networks. The IMS is able to connect to both PSTN/ISDN (Public Switched Telephone Network/Integrated Services Digital Network) as well as the Internet.

The IMS makes use of the Session Initiation Protocol (SIP) to set up and control calls or sessions between user terminals (or terminals and application servers). The Session Description Protocol (SDP), carried by SIP signalling, is used to describe and negotiate the media components of the session. Whilst SIP was created as a user-to-user protocol, IMS allows operators and service providers to control user access to services and to charge users accordingly. The 3GPP has chosen SIP for signalling between a User Equipment (UE) and the IMS as well as between the components within the IMS.

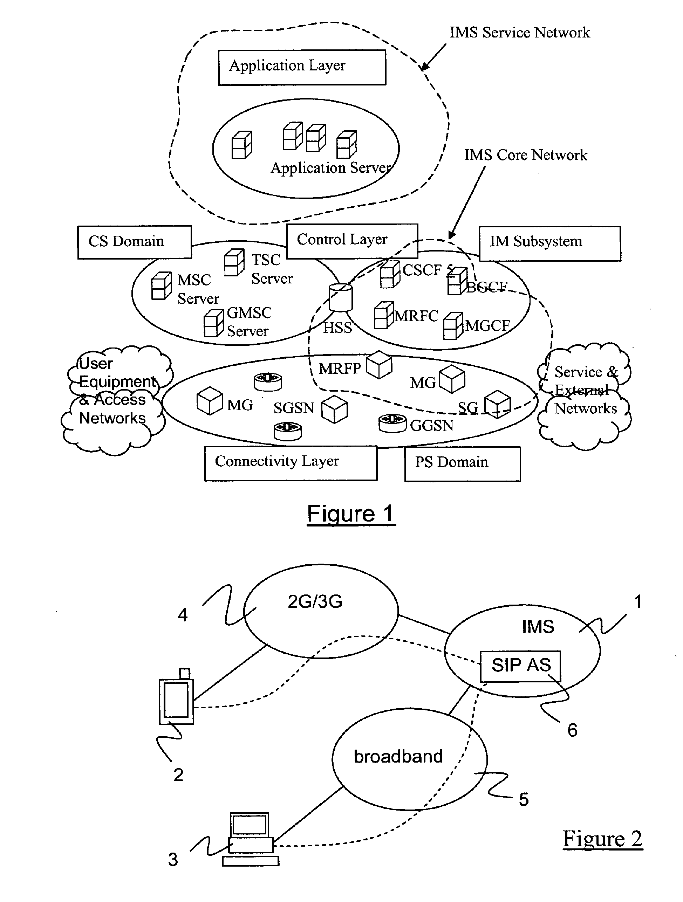

By way of example, Figure 1 illustrates schematically how the IMS fits into the mobile network architecture in the case of a GPRS/PS access network (IMS can of course operate over other access networks). Call/Session Control Functions (CSCFs) operate as SIP proxies within the IMS. The 3GPP architecture defines three types of CSCFs: the Proxy CSCF (P-CSCF) which is the first point of contact within the IMS for a SIP terminal; the Serving CSCF (S-CSCF) which provides services to the user that the user is subscribed to; and the Interrogating CSCF (I-CSCF) whose role is to identify the correct S-CSCF and to forward to that S-CSCF a request received from a SIP terminal via a P-CSCF.

Within the IMS service network, Application Servers (ASs) are provided for implementing IMS service functionality. Application Servers provide services to end users in an IMS system, and may be connected either as end-points over the 3GPP defined Mr interface, or "linked in" by an S-CSCF over the 3GPP defined ISC interface. In the latter case, Initial Filter Criteria (IFC) are used by an S-CSCF to determine which Applications Servers should be "linked in" during a SIP Session establishment (or indeed for the purpose of any SIP method, session or non-session related). The IFCs are received by the S-CSCF from an HSS during the IMS registration procedure as part of a user's Subscriber Profile.

In the event that a user of a mobile device looses the device, or the device is stolen or presumed stolen, the user will likely want to have the device disabled to prevent its misuse. In today's networks (e.g. 2G/3G and IMS), a network operator has the possibility to block a SIM/USIM/ISIM card and prevent or limit access to network services from the associated subscription. This is done within the network. Operator initiated SIM/USIM/ISIM blocking will however only prevent use of network services (voice calls, SMS, access to presence information, etc). It does not place any block on access to data stored locally on the device (e.g. private phone book, picture library, sent SMSs, call history, etc). Moreover, such blocking will prevent a user from accessing network services from any device associated with the subscription. This is undesirable as future service models (e.g. IMS based) rely upon subscribers making use of multiple access devices to access network services. For example a user may have a 2G/3G device and one or more devices connected to a broadband network (e.g. via a home gateway).

In addition to the inconvenience to a user when one or all of his or her devices are effectively blocked from accessing network services, there are significant cost issues with this approach. If a SIM/USIM/ISIM card is blocked (which means that even if found again, the SIM card cannot be used), a new SIM card has to be sent to the customer and network parameters have to be re-set.

GB2380356 describes a procedure for remotely locking a mobile device and which involves the sending of a text message (SMS) to the device and which includes an unlocking PIN code. Upon receipt of the text message at the device, the device is locked, and can only be unlocked by the user entering the PIN code. EP1473952 describes a similar procedure for locking a mobile device. WO2007/103121 descibes the use of a SIP application server acting as gateway for connecting mobile devices to an individual (private) network. It proposes the use of this architecture to destroy data on a lost or stolen mobile device.

### Summary

It is an object of the present invention to overcome or at least mitigate the problems considered above. In particular, it is an object to provide a mechanism for locking, or otherwise restricting access to, a mobile device using an over-the-air locking instruction and which is specific to a given user device.

According to a first aspect of the present invention there is provided a method of securing a mobile wireless telecommunication device to prevent or restrict access to data stored in the device, the device comprising an IP Multimedia Subsystem, IMS, client for interacting with an IMS network following IMS registration on the basis of a user's IMS subscription. The method is characterised by performing IMS registration of the device with the IMS network and, whilst the device is registered with the IMS network, and registering the device with a SIP Application Server of the IMS network in respect of said user whilst relying on the IMS registration to authenticate the user. The method is further characterised by, in the event that said user wishes to prevent or restrict access to data stored on the device when the user does not have access to the device but has access to an alternative communication device, authenticating the user, via said alternative communication device, to said IMS network, on the basis of such authentication, allowing the user to access the server and sending from said alternative communication device to the server an instruction to lock said mobile wireless telecommunication device, upon receipt of said instruction at the server, causing a Session Initiation Protocol message containing a lock instruction to be sent over the air to said mobile wireless telecommunication device, the instruction containing an unlocking code, receiving said lock instruction at the device, causing the device to be locked, sending the unlocking code from the server to said alternative communication device, wherein, the mobile wireless telecommunication device can only be unlocked by a user entering said unlocking code.

Embodiments of the invention provide a mechanism for reducing the risk that sensitive data held on a mobile device can be accessed by an unauthorised party. The mechanism effectively piggybacks on an available IMS authentication procedure so the impact on the network is minimised.

The step of registering the device with a network-based server in respect of a given user may comprise registering a Globally Routable User Agent URI assigned to the mobile wireless telecommunication device. The Session Initiation Protocol message is routed to the mobile wireless telecommunication device using the registered Globally Routable User Agent URI.

The method may comprise including in said Session Initiation Protocol message, an IMS Application Reference ID (e.g. an IARI) identifying a locking application, wherein it is that locking application that performs, within the device, the step of causing the device to be locked. In this case, the step of registering the device with a network-based server in respect of a given user may comprise registering at the server the IMS Application Reference ID.

The step of registering the device with a network-based server in respect of a given user may comprise performing an IMS registration between a Serving Call Session Control Function and performing a third party registration between the Serving Call Session Control Function and said network-based server. In this case, a SIP REGISTER message sent from the mobile wireless telecommunication device to the Serving Call Session Control Function may include a device name, e.g. a user entered nickname. The device name is further included in a SIP REGISTER sent from the Serving Call Session Control Function to the network-based server. The device name may be incorporated into one of an Instance ID and an IMS Application Reference ID of the SIP REGISTER message(s).

The mobile wireless telecommunication device may comprise a 2G or 3G radio interface, in which case said step of causing a lock instruction to be sent over the air to said mobile wireless telecommunication device may comprise including the instruction in a Short Message Service message.

The step of registering the device with a network-based server in respect of a given user may comprise establishing a shared authentication key between the mobile wireless telecommunication device and said server. This key or a derivative of the key is sent with said lock instruction to allow the mobile wireless telecommunication device to authenticate the server as the source of the instruction.

According to a second aspect of the present invention there is provided a SIP Application Server for use within an IP Multimedia Subsystem, IMS, network. The server comprises a registration unit for registering mobile wireless telecommunication devices to respective users whilst those devices are registered with the IMS network, the devices each comprising an IMS client, characterised by a receiver for receiving from a client terminal registered with the IMS using IMS-based user authentication, via said IMS, an instruction to lock a mobile wireless telecommunication device registered for a user and which is currently registered with the IMS on the basis of the user's IMS subscription, and a sender for sending, upon receipt of said instruction, a Session Initiation Protocol message containing a lock instruction over the air to said mobile wireless telecommunication device, the instruction containing an unlocking code.

The server according to the invention has the advantage that it provides an interface over which a user can lock specific devices, relying upon a pre-existing IMS authentication mechanism.

The registration unit may be being configured to receive a third party registration request from a Serving Call Session Control Function in respect of a user, and to register for that user a device name allocated to said mobile wireless telecommunication device. This device name may be incorporated into one of an Instance ID and an IMS Application Reference ID contained in the third party registration request.

### Brief Description of the Drawings

Figure 1 illustrates schematically an IMS network integrated into a 2G/3G telecommunications system;
Figure 2 illustrates schematically a multi-access network architecture for accessing IMS services;
Figure 3 illustrates a procedure for registering a mobile device with an IMS-based locking service, and for subsequently locking that device;
Figure 4 is a flow diagram further illustrating the procedure of Figure 3
Figure 5 illustrates schematically the main functional components of a SIP Application Server providing a security service to IMS subscribers; and
Figure 6 illustrates schematically a mobile device configured for use with the service illustrated in Figure 3.

### Detailed Description

There is illustrated in Figure 2 a multi-access network architecture for accessing IP Multimedia Subsystem (IMS) services provided by an IMS network 1. By way of example, the Figure shows a pair of user terminals including a mobile 2G/3G device 2 and a Personal Computer (PC) 3. The mobile device 2 is able to access the IMS via a 2G/3G wireless access network 4, and comprises an IMS client. Of course, the device 2 may also access other non-IMS services via the 2G/3G access network including, for example, voice calls, web browsing, etc. The PC 3 on the other hand accesses the IMS network via a wired broadband network 5. This requires that the user perform IMS registration, using for example a username and password, via a web interface.

Figure 2 also shows a SIP Application Server AS 6 within the IMS network. This SIP AS functions as a security AS. The SIP AS has an interface to one or more Call Session Control Functions (CSCFs) within the IMS that allow it to interact with devices comprising an IMS client, such as the mobile device 2. The SIP AS also has an *http* interface that allows it to be accessed via the Internet. The SIP AS 6 provides novel security functionality to IMS subscribers as will now be described.

It is proposed here to allow an IMS subscriber to control access to his or her registered devices via a web page accessed over the Internet and to which access is granted through IMS-based user authentication. This will allow a lost or stolen device to be selected and locked. When the stolen/lost device is selected to be locked, the subscriber is presented with an automatically generated pin code which can later be used to unlock the device if and when it is located. When a device is locked, no access is given to the menu system of the device (thus hiding the user's sensitive private data), other than to allow entry of the unlocking code. Switching off of the locked device will not be allowed in order to allow tracking of the terminal (until it runs out of battery).

Session Control Functions (CSCFs) within the IMS that allow it to interact with devices comprising an IMS client, such as the mobile device 2. The SIP AS also has an *http* interface that allows it to be accessed via the Internet. The SIP AS 6 provides novel security functionality to IMS subscribers as will now be described.

It is proposed here to allow an IMS subscriber to control access to his or her registered devices via a web page accessed over the Internet and to which access is granted through IMS-based user authentication. This will allow a lost or stolen device to be selected and locked. When the stolen/lost device is selected to be locked, the subscriber is presented with an automatically generated pin code which can later be used to unlock the device if and when it is located. When a device is locked, no access is given to the menu system of the device (thus hiding the user's sensitive private data), other than to allow entry of the unlocking code. Switching off of the locked device will not be allowed in order to allow tracking of the terminal (until it runs out of battery).

Device security is facilitated by a dedicated security application that is installed on the device. JSR281 "IMS Service APIs" standards can be used to develop the security application. When a mobile device (with this security application installed) is acquired by a subscriber (or such a security application is downloaded and installed onto the device), at first power-on the user will be requested to enter a "nickname" for the device (e.g. My_Work_Phone). At this time the user is also asked to provide a secret key. The nickname is registered with the SIP AS 6 in the IMS network together with a unique identity (or Instance ID) of the device. This instance ID may be, for example, an IMSI or MAC address of the device. In normal use, access to the device (both services and data) is locked either on demand by the user, or after a timeout period has elapsed, e.g. 2 minutes. In either case, access can only be obtained by entering the secret key stored on, or otherwise known, to the device. Locking may involve encrypting sensitive user data.

The security application may not by itself prevent someone who has stolen (or otherwise finds) the device from accessing data stored on the device. For example, if the device is unlocked when it is stolen, the thief may immediately over-ride the locking mechanism to disable it. Therefore, an extra service to lock the device from the network is added.

If the user loses the mobile device 2 illustrated in Figure 2, she/he connects to the web page using an alternative communication device such as PC 3, and selects the missing device based on the device's nickname. This involves performing an IMS authentication process. The SIP AS 6 will associate the selected device nickname with a specific device. The SIP AS 6 has access to this information based on the earlier registration performed by the subscriber. A specific message will be sent to the terminal (with an automatically generated pin code), and it will be locked. The SIP AS may make use of the 3GPP IMS Globally Routable User Agent URI (GRUU) functionality in order to route the locking request to the specified device. The GRUU may be a Public GRUU (P-GRUU) derived by the S-CSCF at registration on the basis of the Instance ID provided by the device. If and when the device is subsequently unlocked by the user, it should send a message to the IMS network informing the network that the device has been unlocked. If the device has already received a locking order and a further locking order is received, the second order shall be ignored.

Considering now the security application installed in the mobile device, this shall perform the following functions:
- At first power-on, request the user to input a device nickname that will allow the user to memorably identity the device. This assumes that the device has earlier performed IMS registration based upon an IMS Public User Identity (IMPU), and has indicated to the IMS network that the device supports GRUU functionality.
- Request the user to provide a secret key to encrypt at least sensitive data in the device (e.g. contact list,...). This secret key will be requested at least every time the terminal is switched-on.
- Register with the SIP AS: 1) the device nickname, 2) a device ID, and 3) an application identity that identifies the security application on the device. As already mentioned, the device ID may be a GRUU, whilst the application reference identity may be an IARI.
- Receive in response to the registration a random value. This allows the device to later authenticate a locking instruction received from the network.
- Lock the device when a SIP INVITE is received including a value obtained by hashing the random number with the device ID, and the appropriate IARI. These values may be contained the Accept-Contact or P-Preferred-Service header.
- Store an unlocking code contained within an XML body of the received SIP INVITE.

The new functionality implemented at the SIP AS is required to perform the following:
- Manage a list of device nicknames and device ID's (received in the third party Register) which can be locked by a subscriber over a GUI or Ut interface.
- Implement policies to determine which method to use to send the locking message, based on HSS information (for example is the device attached to GSM/UMTS/IMS). This may involve retrieving a telephone number (MSISDN) for the device in the case where the device only has 2G/3G access.
- Enforce policies based on the decision, e.g. if only GSM/GPRS/UMTS is available, send SMS to lock device, or if IMS is available, send a SIP INVITE to lock the device. This INVITE may be a "Call-Out-Of-The-blue" INVITE.
- On a locking order from the subscriber, a pin code is randomly generated and returned to the subscriber via the web interface.

It is expected that the approach described here can be introduced without requiring significant changes to the IMS nodes (other than the security SIP AS). In particular, the S-CSCF allocated to a subscriber generates the T-GRUU and the P-GRUU at registration according to 3GPP standards and sends them as part of a third party registration process to the SIP AS that manages the security service (and identified to the S-CSCF by the HSS). The S-CSCF also sends to the SIP AS the device nickname (given at initial registration), as an extension of the Instance ID or the identification of the security application (e.g. IARI). Of course, the S-CSCF is not required to know that the Instance ID or the IARI includes the nickname, and it can effectively be transported transparently through the S-CSCF.

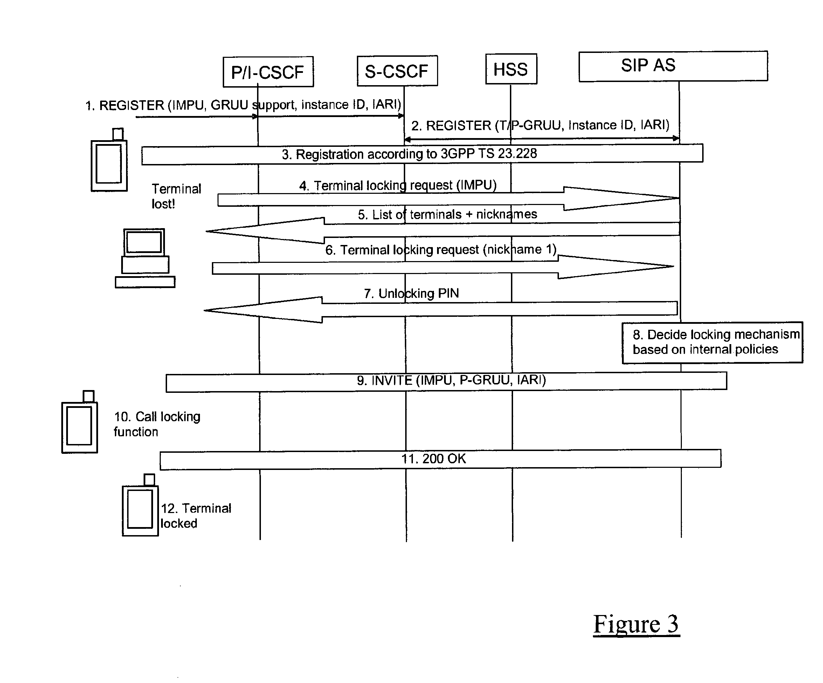

Figure 3 illustrates the process for firstly registering a mobile device with an IMS-based SIP AS, steps 1 to 3. Step 1 may be a standard IMS registration process by means of which the device initiates registration with the IMS and all appropriate services. Upon discovering that the device has been lost or stolen, the user registers with the IMS via an alternative device, and requests at step 4 a locking action. At steps 5 to 7, the user selects the device using the previously specified nickname and receives the locking PIN. At step 8 the AS selects the locking mechanism to be employed, in this example routing a SIP INVITE using the device's registered P-GRUU, and sends the INVITE at step 9. At steps 10 to 12, the device receives and acknowledges the lock instruction, and locks the device.

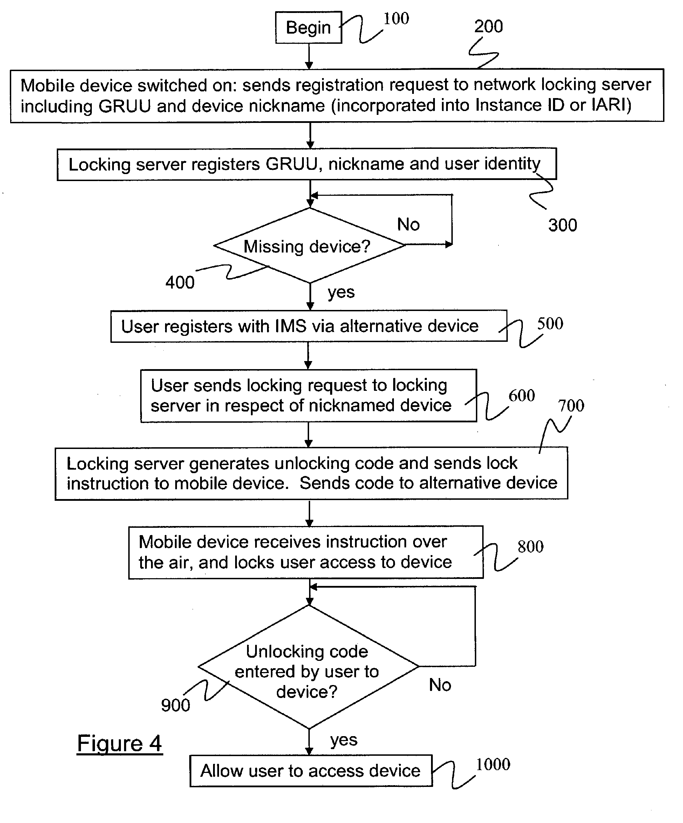

Figure 4 is a flow diagram further illustrating the procedure of Figure 3. The process begins at step 100, for example with the acquisition of a new IMS-enabled terminal by a subscriber of a 2G/3G network. At step 200, the subscriber switches on the device for the first time, causing the device to register with the SIP AS including providing to the SIP AS a device nickname and device GRUU, step 300. If the user believes that the device has been lost or stolen at step 400, the user registers to the IMS network via a web interface, e.g. using a PC, step 500. Via the web interface, at step 600, the user selects the device using the registered nickname, and requests the IMS service to lock the missing device. At step 700, the security AS generates an unlocking code (e.g. 10 digits), and includes this in a lock instruction that is sent to the mobile device. This may be routed using a registered GRUU, or using an MSISDN (e.g. where the message is an SMS message). The SIP AS also sends the unlocking code to the PC, via the web interface. At step 800, the missing mobile device receives the lock instructions, authenticates the instruction, and then immediately locks the device. If the device is subsequently found by the subscriber and the unlocking code correctly entered, step 900, the device is unlocked at step 1000.

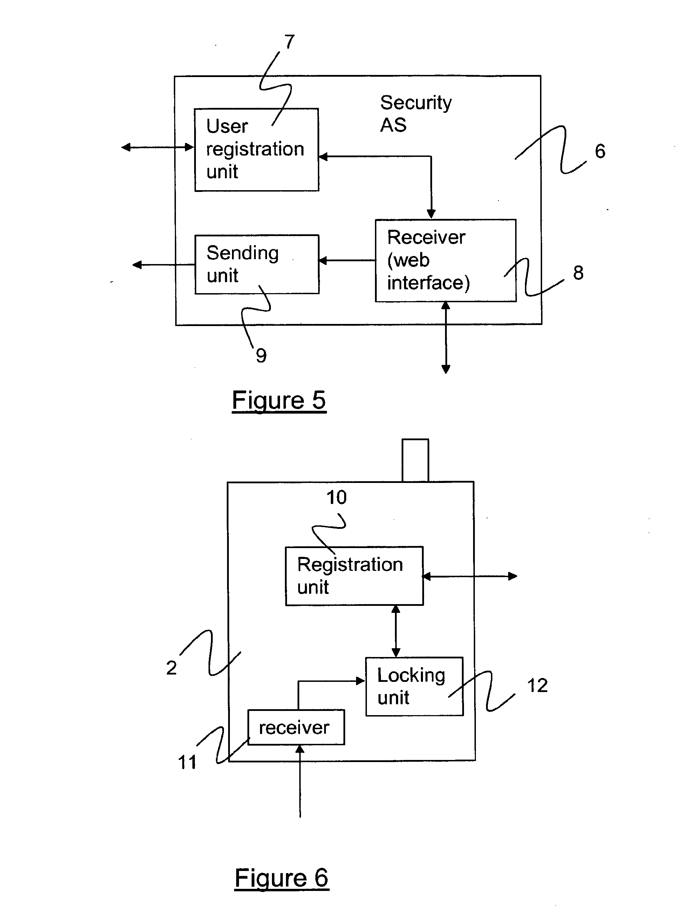

Figure 5 illustrates schematically the main functional components of the SIP AS 6. These components are: a user registration unit 7 that handles user device registration including registering for each device a GRUU and a device nickname; a receiver 8 that interacts with an alternative user device such as a PC via a web interface, and retrieves data from the user registration unit; and a sending unit 9 responsive to an instruction received from the receiver 8 to send a lock instruction to a mobile device. It is the receiver 8 that is responsible for generating the unlocking code.

Figure 6 illustrates schematically a mobile device 2 that is assumed to comprise a 2G/3G radio interface and associated functionality, as well as an IMS client. In addition, the device comprises a registration unit 10 configured to register the device with an IMS based security service as described above, and a receiver 11 for receiving a lock instruction from the locking service. Any such instruction is passed to a locking unit 12 which supports a security application. This application is responsible for both authenticating the received instruction and locking the device until such time as a correct unlocking code is entered. Additionally, the security application handles "normal" locking procedures including those associated with power-on and time-outs.

It will be appreciated by the person of skill in the art that various modifications may be made to the above described embodiments without departing from the scope of the present invention. For example, whilst the embodiment described above makes use of a SIP AS that is within an operator's IMS network, this need not be the case. The SIP AS may be a SIP AS that is owned and operated by a third party that provides the new locking service over and above the services provided to subscribers by the IMS network operator.

## Claims

1. A method of securing a mobile wireless telecommunication device to prevent or restrict access to data stored in the device, the device comprising an IP Multimedia Subsystem, IMS, client for interacting with an IMS network following IMS registration on the basis of a user's IMS subscription, the method being **characterised by** the steps of:
performing IMS registration of the device with the IMS network and, whilst the device is registered with the IMS network, registering the device with a SIP Application Server of the IMS network in respect of said user (300) whilst relying on the IMS registration to authenticate the user;
in the event that said user wishes to prevent or restrict access to data stored on the device when the user does not have access to the device but has access to an alternative communication device,
authenticating the user, via said alternative communication device, to said IMS network (500),
on the basis of such authentication, allowing the user to access the server and sending from said alternative communication device to the server an instruction to lock said mobile wireless telecommunication device (600),
upon receipt of said instruction at the server, causing a Session Initiation Protocol message containing a lock instruction to be sent over the air to said mobile wireless telecommunication device, the instruction containing an unlocking code (700),
receiving said lock instruction at the device, causing the device to be locked (800),
sending the unlocking code from the server to said alternative communication device (700),
wherein, the mobile wireless telecommunication device can only be unlocked by a user entering said unlocking code.

2. A method according to claim 1, said step of registering the device with a network-based server in respect of a given user comprising registering a Globally Routable User Agent URI assigned to the mobile wireless telecommunication device, wherein said Session Initiation Protocol message is routed to the mobile wireless telecommunication device using the registered Globally Routable User Agent URI.

3. A method according to claim 1 or 2 and comprising including in said Session Initiation Protocol message, an IMS Application Reference ID identifying a locking application, wherein it is that locking application that performs, within the device, the step of causing the device to be locked.

4. A method according to claim 3, said step of registering the device with a network-based server in respect of a given user comprising registering at the server the IMS Application Reference ID.

5. A method according to any one of the preceding claims, said step of registering the device with a network-based server in respect of a given user comprising performing an IMS registration between a Serving Call Session Control Function and performing a third party registration between the Serving Call Session Control Function and said network-based server.

6. A method according to claim 5 and comprising including in a SIP REGISTER message sent from the mobile wireless telecommunication device to the Serving Call Session Control Function a device name, and further including this device name in a SIP REGISTER sent from the Serving Call Session Control Function to the network-based server.

7. A method according to claim 6, wherein, said device name is a user entered device name.

8. A method according to claim 6 or 7 and comprising incorporating said device name into one of an Instance ID and an IMS Application Reference ID.

9. A method according to any one of the preceding claims, said step of registering the device with a network-based server in respect of a given user comprising establishing a shared authentication key between the mobile wireless telecommunication device and said server, this key or a derivative of the key being sent with said lock instruction to allow the mobile wireless telecommunication device to authenticate the server as the source of the instruction.

10. A Session Initiation Protocol, SIP, Application Server for use within an IP Multimedia Subsystem, IMS, network and comprising:
**characterised by**
a registration unit (7) for registering mobile wireless telecommunication devices to respective users whilst those devices are registered with the IMS network, the devices each comprising an IMS client;
a receiver (8) for receiving from a client terminal registered with the IMS using IMS-based user authentication, via said IMS, an instruction to lock a mobile wireless telecommunication device registered for a user and which is currently registered with the IMS on the basis of the user's IMS subscription; and
a sender (9) for sending, upon receipt of said instruction, a SIP message containing a lock instruction over the air to said mobile wireless telecommunication device, the instruction containing an unlocking code.

11. A server according to claim 10, said registration unit (7) being configured to receive a third party registration request from a Serving Call Session Control Function in respect of a user, and to register for that user a device name allocated to said mobile wireless telecommunication device.

12. A server according to claim 11, wherein said device name is incorporated into one of an Instance ID and an IMS Application Reference ID contained in the third party registration request.

## Patentansprüche

1. Verfahren zum Sichern einer mobilen drahtlosen Telekommunikationseinrichtung, um Zugriff auf Daten zu verhindern oder zu beschränken, die in der Einrichtung gespeichert sind, wobei die Einrichtung einen IMS(IP-Multimedia-Subsystem)-Client zur Interaktion mit einem IMS-Netz nach IMS-Registrierung auf der Basis einer IMS-Subskription des Benutzers umfasst, wobei das Verfahren durch die folgenden Schritte gekennzeichnet ist:
Ausführen von IMS-Registrierung der Einrichtung beim IMS-Netz und, während die Einrichtung beim IMS-Netz registriert wird, Registrieren der Einrichtung bei einem SIP(Sitzungsinitiierungsprotokoll)-Anwendungsserver des IMS-Netzes mit Bezug auf den Benutzer (300), während der IMS-Registrierung vertraut wird, um den Benutzer zu authentifizieren;
falls der Benutzer Zugriff auf in der Einrichtung gespeicherte Daten zu verhindern oder zu beschränken wünscht, wenn der Benutzer keinen Zugriff auf die Einrichtung hat, aber Zugriff auf eine alternative Kommunikationseinrichtung hat:
Authentifizieren des Benutzers über die alternative Kommunikationseinrichtung beim IMS-Netz (500),
auf der Basis einer solchen Authentifizierung, dem Benutzer erlauben, auf den Server zuzugreifen, und von der alternativen Kommunikationseinrichtung an den Server eine Anweisung senden, die mobile drahtlose Telekommunikationseinrichtung (600) zu sperren,
nach Empfang der Anweisung am Server veranlassen, dass eine SIP-Nachricht, die eine Sperranweisung enthält, über die Luft an die mobile drahtlose Telekommunikationseinrichtung gesendet wird, wobei die Anweisung einen Entsperrcode (700) enthält,
Empfangen der Sperranweisung an der Einrichtung, was veranlasst, dass die Einrichtung gesperrt wird (800),
Senden des Entsperrcodes vom Server an die alternative Kommunikationseinrichtung (700),
worin die mobile drahtlose Telekommunikationseinrichtung nur durch einen Benutzer entsperrt werden kann, der den Entsperrcode eingibt.

2. Verfahren nach Anspruch 1, worin der Schritt des Registrierens der Einrichtung bei einem netzbasierten Server mit Bezug auf einen gegebenen Benutzer das Registrieren eines global routebaren Benutzer-Agent-URI umfasst, der der mobilen drahtlosen Telekommunikationseinrichtung zugewiesen ist, worin die SIP-Nachricht an die mobile drahtlose Telekommunikationseinrichtung unter Verwendung des routebaren Benutzer-Agent-URI geroutet wird.

3. Verfahren nach Anspruch 1 oder 2 und umfassend, dass in der SIP-Nachricht eine IMS-Anwendungsreferenz-Kennung eingeschlossen ist, die eine Sperranwendung identifiziert, worin es diese Sperranwendung ist, die innerhalb der Einrichtung den Schritt des Veranlassens ausführt, dass die Einrichtung gesperrt wird.

4. Verfahren nach Anspruch 3, worin der Schritt des Registrierens der Einrichtung bei einem netzbasierten Server mit Bezug auf einen gegebenen Benutzer umfasst, dass am Server die IMS-Anwendungsreferenz-Kennung registriert wird.

5. Verfahren nach einem der vorhergehenden Ansprüche, worin der Schritt des Registrierens der Einrichtung bei einem netzbasierten Server mit Bezug auf einen gegebenen Benutzer umfasst, dass eine IMS-Registrierung zwischen einer bedienenden Anrufsitzungs-Steuerfunktion ausgeführt wird und eine Drittpersonen-Registrierung zwischen der bedienenden Anrufsitzungs-Steuerfunktion und dem netzbasierten Server ausgeführt wird.

6. Verfahren nach Anspruch 5 und umfassend, dass in einer SIP-REGISTER-Nachricht, die von der mobilen drahtlosen Telekommunikationseinrichtung an die bedienenden Anrufsitzungs-Steuerfunktion gesendet wird, ein Einrichtungsname eingeschlossen ist und dass außerdem dieser Einrichtungsname in einem SIP-REGISTER eingeschlossen ist, das von der bedienenden Anrufsitzungs-Steuerfunktion an den netzbasierten Server gesendet wird.

7. Verfahren nach Anspruch 6, worin der Einrichtungsname ein vom Benutzer eingetragener Einrichtungsname ist.

8. Verfahren nach Anspruch 6 oder 7, und umfassend, dass der Einrichtungsname in eine einer Instanz-Kennung und einer IMS-Anwendungsreferenz-Kennung integriert wird.

9. Verfahren nach einem der vorhergehenden Ansprüche, wobei der Schritt des Registrierens der Einrichtung bei einem netzbasierten Server mit Bezug auf einen gegebenen Benutzer umfasst, dass ein gemeinsamer Authentifizierungsschlüssel zwischen der mobilen drahtlosen Telekommunikationseinrichtung und dem Server festgelegt wird, wobei dieser Schlüssel und eine Ableitung des Schlüssels mit der Sperranweisung gesendet werden, um der mobilen drahtlosen Telekommunikationseinrichtung zu ermöglichen, den Server als die Quelle der Anweisung zu authentifizieren.

10. SIP(Sitzungsinitiationsprotokoll)-Anwendungsserver zur Verwendung innerhalb eines IMS(IP-Multimedia-Subsystem)-Netzes und umfassend:
**gekennzeichnet durch**:
eine Registriereinheit (7) zum Registrieren von mobilen drahtlosen Telekommunikationseinrichtungen an jeweilige Benutzer, während diese Einrichtungen beim IMS-Netz registriert sind, wobei jede der Einrichtungen einen IMS-Client umfasst;
einen Empfänger (8), um von einem Client-Endgerät, das unter Verwendung von IMS-basierter Benutzerauthentifizierung beim IMS registriert ist, über das IMS eine Anweisung zu empfangen, eine für einen Benutzer registrierte mobile drahtlose Telekommunikationseinrichtung zu sperren und welche gegenwärtig beim IMS auf der Basis der IMS-Subskription des Benutzers registriert ist; und
einen Sender (9), um nach Empfang der Anweisung eine SIP-Nachricht, die eine Sperranweisung enthält, über die Luft an die mobile drahtlose Telekommunikationseinrichtung zu senden, wobei die Anweisung einen Entsperrcode enthält.

11. Server nach Anspruch 10, wobei die Registriereinheit (7) dazu konfiguriert ist, eine Drittpersonen-Registrieranforderung von einer bedienenden Anrufsitzungs-Steuerfunktion mit Bezug auf einen Benutzer zu empfangen und für diesen Benutzer einen Einrichtungsnamen zu registrieren, der der mobilen drahtlosen Telekommunikationseinrichtung zugeordnet ist.

12. Server nach Anspruch 11, worin der Einrichtungsname in eine einer Instanz-Kennung und einer IMS-Anwendungsreferenz-Kennung integriert ist, die in der Drittpersonen-Registrieranforderung enthalten ist.

## Revendications

1. Procédé de sécurisation d'un dispositif de télécommunication sans fil mobile pour empêcher ou limiter un accès aux données mémorisées dans le dispositif, le dispositif comprenant un client IMS, IP Multimedia Subsystem, pour interagir avec un réseau IMS à la suite d'un enregistrement IMS sur la base d'un abonnement IMS d'un utilisateur, le procédé étant **caractérisé par** les étapes :
d'exécution d'un enregistrement IMS du dispositif dans le réseau IMS et, alors que le dispositif est enregistré dans le réseau IMS, d'enregistrement du dispositif dans un serveur d'application SIP du réseau IMS en relation avec ledit utilisateur (300) tout en s'appuyant sur l'enregistrement IMS pour authentifier l'utilisateur ;
dans le cas où ledit utilisateur souhaite empêcher ou limiter l'accès aux données mémorisées sur le dispositif lorsque l'utilisateur n'a pas accès au dispositif, mais a un accès à un autre dispositif de communication,
d'authentification de l'utilisateur, par l'intermédiaire dudit autre dispositif de communication, dans ledit réseau IMS (500),
sur la base de cette authentification, d'autorisation de l'utilisateur à accéder au serveur et d'envoi dudit autre dispositif de communication au serveur d'une instruction pour verrouiller ledit dispositif de télécommunication sans fil mobile (600),
lors de la réception de ladite instruction au niveau du serveur, d'envoi d'un message SIP, Session Initiation Protocol, contenant une instruction de verrouillage de manière hertzienne audit dispositif de télécommunication sans fil mobile, l'instruction contenant un code de déverrouillage (700),
de réception de ladite instruction de verrouillage au niveau du dispositif, provoquant le verrouillage du dispositif (800),
d'envoi du code de déverrouillage du serveur audit autre dispositif de communication (700),
dans lequel, le dispositif de télécommunication sans fil mobile ne peut être déverrouillé que par l'entrée par un utilisateur dudit code de déverrouillage.

2. Procédé selon la revendication 1, dans lequel ladite étape d'enregistrement du dispositif dans un serveur basé sur le réseau en relation avec un utilisateur donné comprend l'enregistrement d'un URI d'agent d'utilisateur mondialement routable attribué au dispositif de télécommunication sans fil mobile, dans lequel ledit message SIP, Session Initiation Protocol, est acheminé vers le dispositif de télécommunication sans fil mobile en utilisant un URI d'agent d'utilisateur mondialement routable.

3. Procédé selon la revendication 1 ou 2 et comprenant l'inclusion dans ledit message SIP, Session Initiation Protocol, d'un identifiant de référence d'application IMS identifiant une application de verrouillage, dans lequel c'est cette application de verrouillage qui effectue, dans le dispositif, l'étape pour provoquer le verrouillage du dispositif.

4. Procédé selon la revendication 3, dans lequel ladite étape d'enregistrement du dispositif dans un serveur basé sur le réseau en relation avec un utilisateur donné comprend l'enregistrement au niveau du serveur de l'identifiant de référence d'application IMS.

5. Procédé selon l'une quelconque des revendications précédentes, dans lequel ladite étape d'enregistrement du dispositif dans un serveur basé sur le réseau en relation avec un utilisateur donné comprend l'exécution d'un enregistrement IMS entre une fonction de commande de session d'appel desservante et l'exécution d'un troisième enregistrement de tiers entre la fonction de commande de session d'appel desservante et ledit serveur basé sur le réseau.

6. Procédé selon la revendication 5 et comprenant l'inclusion dans un message SIP REGISTER envoyé par le dispositif de télécommunication sans fil mobile à la fonction de commande de session d'appel desservante d'un nom de dispositif, et l'inclusion en outre de ce nom de dispositif dans un message SIP REGISTER envoyé par la fonction de commande de session d'appel desservante au serveur basé sur le réseau.

7. Procédé selon la revendication 6, dans lequel ledit nom de dispositif est un nom de dispositif entré par l'utilisateur.

8. Procédé selon la revendication 6 ou 7 et comprenant l'incorporation dudit nom de dispositif dans l'un d'un identifiant d'instance et d'un identifiant de référence d'application IMS.

9. Procédé selon l'une quelconque des revendications précédentes, dans lequel ladite étape d'enregistrement du dispositif dans un serveur basé sur le réseau en relation avec un utilisateur donné comprend l'établissement d'une clé d'authentification partagée entre le dispositif de télécommunication sans fil mobile et ledit serveur, cette clé ou une déduction de la clé étant envoyée avec ladite instruction de verrouillage pour permettre au dispositif de télécommunication sans fil mobile d'authentifier le serveur en tant que source de l'instruction.

10. Serveur d'application SIP, Session Initiation Protocol, pour une utilisation dans un réseau IMS, IP Multimedia Subsystem, et comprenant :
une unité d'enregistrement (7) pour enregistrer des dispositifs de télécommunication mobile sans fil pour des utilisateurs respectifs alors que ces dispositifs sont enregistrés dans le réseau IMS, les dispositifs comprenant chacun un client IMS ;
un récepteur (8) pour recevoir d'un terminal de client enregistré dans l'IMS en utilisant une authentification d'utilisateur basée sur l'IMS, par l'intermédiaire dudit IMS, une instruction pour verrouiller un dispositif de télécommunication sans fil mobile enregistré pour un utilisateur et qui est actuellement enregistré dans l'IMS sur la base d'un abonnement IMS de l'utilisateur ; et
un émetteur (9) pour envoyer, lors de la réception de ladite instruction, un message SIP contenant une instruction de verrouillage de manière hertzienne audit dispositif de télécommunication sans fil mobile, l'instruction contenant un code de déverrouillage.

11. Serveur selon la revendication 10, dans lequel ladite unité d'enregistrement (7) est configurée pour recevoir une demande d'enregistrement de tiers d'une fonction de commande de session d'appel desservante en relation avec un utilisateur, et pour enregistrer pour cet utilisateur un nom de dispositif attribué audit dispositif de télécommunication sans fil mobile.

12. Serveur selon la revendication 11, dans lequel ledit nom de dispositif est incorporé dans l'un d'un identifiant d'instance et d'un identifiant de référence d'application IMS contenu dans la demande d'enregistrement de tiers.
